(19) Europäisches Patentamt
European Patent Office
Office européen des brevets

(11) **EP 4 039 493 A1**

(12) **EUROPEAN PATENT APPLICATION**
published in accordance with Art. 153(4) EPC

(43) Date of publication:
**10.08.2022 Bulletin 2022/32**

(51) International Patent Classification (IPC):
**B42D 25/309** (2014.01)

(21) Application number: **20871998.9**

(52) Cooperative Patent Classification (CPC):
**B42D 25/309; B42D 25/328**

(22) Date of filing: **19.08.2020**

(86) International application number:
**PCT/CN2020/110024**

(87) International publication number:
**WO 2021/063126 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 CN 201910943326**

(71) Applicants:
• **Zhongchao Special Security Technology Co., Ltd Beijing 100070 (CN)**
• **China Banknote Printing and Minting Corp. Beijing 100044 (CN)**

(72) Inventors:
• **CUI, Haibo**
  **Beijing 100070 (CN)**
• **ZHANG, Weiwei**
  **Beijing 100070 (CN)**
• **ZHANG, Baoli**
  **Beijing 100070 (CN)**
• **SUN, Kai**
  **Beijing 100070 (CN)**

(74) Representative: **Glawe, Delfs, Moll**
**Partnerschaft mbB von**
**Patent- und Rechtsanwälten**
**Postfach 13 03 91**
**20103 Hamburg (DE)**

(54) **OPTICAL ANTI-COUNTERFEITING ELEMENT AND ANTI-COUNTERFEITING PRODUCT**

(57) The disclosure provides an optical anti-counterfeiting element (1) and an anti-counterfeiting product. The optical anti-counterfeiting element includes a substrate (2); a plurality of reflective facets (3) formed on the substrate, which are used for reflecting and/or transmitting an incident light to a preset position, so as to appear a preset graphic and text information at the preset position; and color modulation structures (4) formed on the reflective facets, which are used for modulating a color of a light reflected and/or transmitted by the reflective facets, so as to appear the preset graphic and text information in a preset color. A colored preset pattern can be reproduced under white light, thereby improving anti-counterfeiting capacity and an identification degree.

Fig. 3

## Description

### Cross-Reference to Related Application

The disclosure claims the priority of Chinese Patent Application 201910943326.0, filed on September 30, 2019, which is incorporated herein in its entirety by reference.

### Technical Field

The disclosure relates to the field of optical anti-counterfeiting, and in particular to an optical anti-counterfeiting element and an anti-counterfeiting product.

### Background

The image reproduction technology is an effective two-line anti-counterfeiting means. Specifically, specific graphic and text information will be observed on the corresponding receiving screen when the proper light source irradiates the surface of the anti-counterfeiting element, and will be unobservable when directly observed. Therefore, the image reproduction technology requires certain conditions to observe hidden characteristics.

The traditional image reproduction technology generally uses the diffraction grating, that is, the incident light is diffracted to the ±1-order position by means of the surface micro-relief structure. With the period and direction of the diffraction grating properly arranged, the position of the diffraction spot can be controlled, such that several light spots can be combined into graphic and texts having specific significance. However, ±1-order diffraction occurs due to the diffraction principle, and generally, two symmetrical patterns appear on the left and right of mirror reflection, which limits the design of graphic and text information. Moreover, the diffraction direction is strictly related to the frequency of the incident light, and accordingly, the light required by the reproduction technology is generally laser light. When white light or daylight is used for illumination, the reproduced pattern has extremely poor definition.

Due to an easy availability of white light sources, especially with the popularization of smart phones, flash lamps are widely used as white light sources, and even sunlight, flashlight, projector light sources and other light sources may be used for illumination of white light reproduction. Therefore, how to reproduce the colored image under white light has become a problem urgently to be solved.

### Summary

The objective of the disclosure is to provide an optical anti-counterfeiting element and an anti-counterfeiting product, which may reproduce a colored preset pattern under white light.

In order to achieve the above objective, an embodiment of the disclosure provides an optical anti-counterfeiting element, which includes: a substrate; a reflective facet, there are a plurality of reflective facets formed on the substrate, which are used for reflecting and/or transmitting an incident light to a preset position, so as to appear a preset graphic and text information at the preset position; and a color modulation structure formed on the reflective facets, which is used for modulating a color of a light reflected and/or transmitted by the reflective facet, so as to appear the preset graphic and text information in a preset color.

In an implementation mode, inclination angles and azimuth angles of the plurality of reflective facets are determined by a Fresnel formula, wherein the Fresnel formula is related to a preset incident angle of the incident light and the preset position.

In an implementation mode, the plurality of reflective facets are a first group of reflective facets, and inclination angles and azimuth angles of the first group of reflective facets are determined by a first Fresnel formula, wherein the first Fresnel formula is related to a first preset incident angle of an incident light and a first preset position; the first group of reflective facets is used for reflecting and/or transmitting the incident an light having the first preset incident angle to the first preset position, so as to appear a first preset graphic and text information at the first preset position; the color modulation structure is a first color modulation structure having a first modulation depth, and is used for appearing the first preset graphic and text information in a first preset color; and a real image of the first preset graphic and text information having the first preset color is appeared at the first preset position under the condition that the incident light having the first preset incident angle irradiates the optical anti-counterfeiting element.

In an implementation mode, the plurality of reflective facets are a second group of reflective facets, and inclination angles and azimuth angles of the second group of reflective facets are determined by a second Fresnel formula, the second Fresnel formula is related to a second preset incident angle of an incident light and a second preset position; and the second group of reflective facets is used for reflecting and/or transmitting the incident light having the second preset incident angle to the second preset position, so as to appear a second preset graphic and text information at the second preset position. The color modulation structure includes a second color modulation structure having a second modulation depth, which is used for appearing the second preset graphic and text information in a second preset color; and a third color modulation structure having a third modulation depth, which is used for appearing the second preset graphic and text information in a third preset color, the second modulation depth is different from the third modulation depth; and a real image of the second preset graphic and text information having a comprehensive color effect composed of the second preset color and the third preset color is appeared at the second preset position under the condition that the incident light having the second preset incident angle irradiates the optical anti-counterfeiting element.

In an implementation mode, the plurality of reflective facets include a third group of reflective facets and a fourth group of reflective facets, inclination angles and azimuth angles of a plurality of reflective facets in the third group of reflective facets are determined by a third Fresnel formula, and inclination angles and azimuth angles of a plurality of reflective facets in the fourth group of reflective facets are determined by a fourth Fresnel formula, the third Fresnel formula is related to a third preset incident angle of an incident light and a third preset position, the fourth Fresnel formula is related to a fourth preset incident angle of an incident light and a fourth preset position, the third preset incident angle is different from the fourth preset incident angle, and the third preset position is different from the fourth preset position; the third group of reflective facets is used for reflecting and/or transmitting the incident light having the third preset incident angle to the third preset position, so as to appear a third preset graphic and text information at the third preset position; and the fourth group of reflective facets is used for reflecting and/or transmitting the incident light having the fourth preset incident angle to the fourth preset position, so as to appear a fourth preset graphic and text information at the fourth preset position. The color modulation structure is a fourth color modulation structure having a fourth modulation depth, and is used for appearing the third preset graphic and text information and the fourth preset graphic and text information in a fourth preset color; and a real image of the third preset graphic and text information having the third preset color is appeared at the third preset position under the condition that the incident light having the third preset incident angle irradiates the optical anti-counterfeiting element, and/or a real image of the fourth preset graphic and text information having the fourth preset color is appeared at the fourth preset position under the condition that the incident light having the fourth preset incident angle irradiates the optical anti-counterfeiting element.

In an implementation mode, the plurality of reflective facets include a fifth group of reflective facets and a sixth group of reflective facets, inclination angles and azimuth angles of a plurality of reflective facets in the fifth group of reflective facets are determined by a fifth Fresnel formula, and inclination angles and azimuth angles of a plurality of reflective facets in the sixth group of reflective facets are determined by a sixth Fresnel formula, the fifth Fresnel formula is related to a fifth preset incident angle of an incident light and a fifth preset position, the sixth Fresnel formula is related to the fifth preset incident angle of an incident light and a sixth preset position, and a vertical distance from the fifth preset position to the substrate is different from a vertical distance from the sixth preset position to the substrate; the fifth group of reflective facets is used for reflecting and/or transmitting the incident light having the fifth preset incident angle to the fifth preset position, so as to appear a fifth preset graphic and text information at the fifth preset position; and the sixth group of reflective facets is used for reflecting and/or transmitting the incident light having the fifth preset incident angle to the sixth preset position, so as to appear a sixth preset graphic and text information at the sixth preset position. The color modulation structure is a fifth color modulation structure having a fifth modulation depth, and is used for appearing the fifth preset graphic and text information and the sixth preset graphic and text information in a fifth preset color; and a real image of the fifth preset graphic and text information having the fifth preset color is appeared at the fifth preset position, and a real image of the sixth preset graphic and text information having the fifth preset color is appeared at the sixth preset position under the condition that the incident light having the fifth preset incident angle irradiates the optical anti-counterfeiting element.

In an implementation mode, the color modulation structure includes a metal film having a preset thickness; and a microstructure having steep sidewalls, or a sub-wavelength microstructure.

In an implementation mode, a depth of the microstructure having steep sidewalls ranges from $0.05\mu m$ to $10\mu m$ under the condition that the color modulation structure is the microstructure having steep sidewalls.

In an implementation mode, a period of the microstructure having steep sidewalls along at least one direction of two directions in a two-dimensional plane in which it is located ranges from $0.5\mu m$ to $100\mu m$ under the condition that the color modulation structure is the microstructure having steep sidewalls.

In an implementation mode, a depth of a groove of the sub-wavelength microstructure ranges from 50nm to 100nm under the condition that the color modulation structure is the sub-wavelength microstructure.

In an implementation mode, a shape of a groove of the sub-wavelength microstructure is sinusoidal, rectangular or zigzag under the condition that the color modulation structure is the sub-wavelength microstructure.

In an implementation mode, a period of the sub-wavelength microstructure in at least one direction of two directions extending along a two-dimensional plane in which it is located ranges from 50nm to 700nm under the condition that the color modulation structure is the sub-wavelength microstructure.

In an implementation mode, a period of the reflective facet along at least one direction of two directions in a two-dimensional plane in which it is located ranges from $0.5\mu m$ to $500\mu m$.

Another embodiment of the disclosure provides an anti-counterfeiting product. The anti-counterfeiting product includes the optical anti-counterfeiting element.

In an implementation mode, the anti-counterfeiting product includes a banknote, an identity card, a bank card or a draft.

By means of the above technical solution, the disclosure creatively reflects and/or transmits the incident light to the preset position by means of the plurality of reflective facets, and modulate colors of reflected light and/or transmitted light by means of the color modulation structure, so as to appear the preset graphic and text information having the preset color at the preset position, thereby the colored preset pattern may be reproduced under white light, and an anti-counterfeiting capability and an identification degree are improved, and the optical anti-counterfeiting element which is 'easy to identify and difficult to counterfeit' may be achieved.

Other characteristics and advantages of the disclosure will be described in detail in the Detailed Description of the Embodiments that follows.

**Brief Description of the Drawings**

The drawings, which are used for providing further understanding of the disclosure and constitute a part of the description, together with the following embodiment, serve to explain the disclosure, but not to restrict the disclosure. In the drawings:

Fig. 1 shows a structural diagram of an optical anti-counterfeiting element provided by an embodiment of the disclosure;

Fig. 2 shows a structural diagram of an optical anti-counterfeiting element (including a microstructure having steep sidewalls) provided by an embodiment of the disclosure;

Fig. 3 shows a schematic diagram of achieving a reproduced image by pixel distribution and combination provided by an embodiment of the disclosure;

Fig. 4 (a) shows a top view of an optical anti-counterfeiting element provided by an embodiment of the disclosure;

Fig. 4 (b) shows a top view of an optical anti-counterfeiting element provided by an embodiment of the disclosure;

Fig. 5 shows a structural diagram of an optical anti-counterfeiting element (including a microstructure having steep sidewalls) for achieving a reproduced colored image by reflection provided by an embodiment of the disclosure;

Fig. 6 shows a structural diagram of an optical anti-counterfeiting element (including a microstructure having steep sidewalls) for achieving a reproduced colored image by transmission provided by an embodiment of the disclosure;

Fig. 7 shows a structural diagram of an optical anti-counterfeiting element (including a sub-wavelength microstructure) for achieving a reproduced colored image by reflection provided by an embodiment of the disclosure;

Fig. 8 shows a structural diagram of an optical anti-counterfeiting element (including a sub-wavelength microstructure) for achieving a reproduced colored image by transmission provided by an embodiment of the disclosure;

Fig. 9 (a) shows a schematic diagram of a composition manner of a reflective facet and a microstructure provided by an embodiment of the disclosure;

Fig. 9 (b) shows a schematic diagram of a composition manner of a reflective facet and a microstructure provided by an embodiment of the disclosure;

Fig. 9 (c) shows a schematic diagram of a composition manner of a reflective facet and a microstructure provided by an embodiment of the disclosure;

Fig. 10 shows a structural diagram of an optical anti-counterfeiting element (including a sub-wavelength microstructure having two groove depths) for achieving a reproduced colored image by reflection provided by an embodiment of the disclosure;

Fig. 11 shows a structural diagram of an optical anti-counterfeiting element (including a sub-wavelength microstructure having two groove depths) for achieving a reproduced colored image by transmission provided by an embodiment of the disclosure;

Fig. 12 shows a structural diagram of an optical anti-counterfeiting element (including a sub-wavelength microstructure) for achieving a reproduced colored image by reflection under irradiation at two incident angles provided by an embodiment of the disclosure;

Fig. 13 shows a structural diagram of an optical anti-counterfeiting element (including a sub-wavelength microstructure) for achieving a reproduced colored image by transmission under irradiation at two incident angles provided by an embodiment of the disclosure;

Fig. 14 shows a structural diagram of an optical anti-counterfeiting element (including a sub-wavelength microstructure and two groups of reflective facets) for achieving a reproduced colored image by reflection provided by an embodiment of the disclosure; and

Fig. 15 shows a structural diagram of an optical anti-counterfeiting element (including a sub-wavelength microstructure and two groups of reflective facets) for achieving a reproduced colored image by transmission provided by an embodiment of the disclosure.

**Detailed Description of the Embodiments**

The specific implementation of the disclosure is described in detail below in conjunction with the drawings. It should be understood that the specific implementation described herein is merely illustrative of the disclosure and is not intended to limit the disclosure.

Due to a reflective facet is randomly distributed in a whole optical anti-counterfeiting element, under the condition of diffuse reflection illumination, the optical anti-counterfeiting element appears a matte effect, and does not appear a specific cognizable color, and therefore appearance related to a reproduced image may not be observed, thereby achieving the hiding of the reproduced image. The reproduced image is formed by some pixel points in a space, and if the pixel points are formed by converging reflected or transmitted light, the reproduced image is a real image; and if the pixel points are formed by converging extension lines of the reflected or transmitted light, the reproduced image is a virtual image. The reproduced image includes the virtual image and the real image. Specifically, when the reproduced image is the real image, the real image may be displayed on a receiving screen on the side in which the real image is located and may be observed by an observer. When the reproduced image is the virtual image, the virtual image may only be directly observed by the observer.

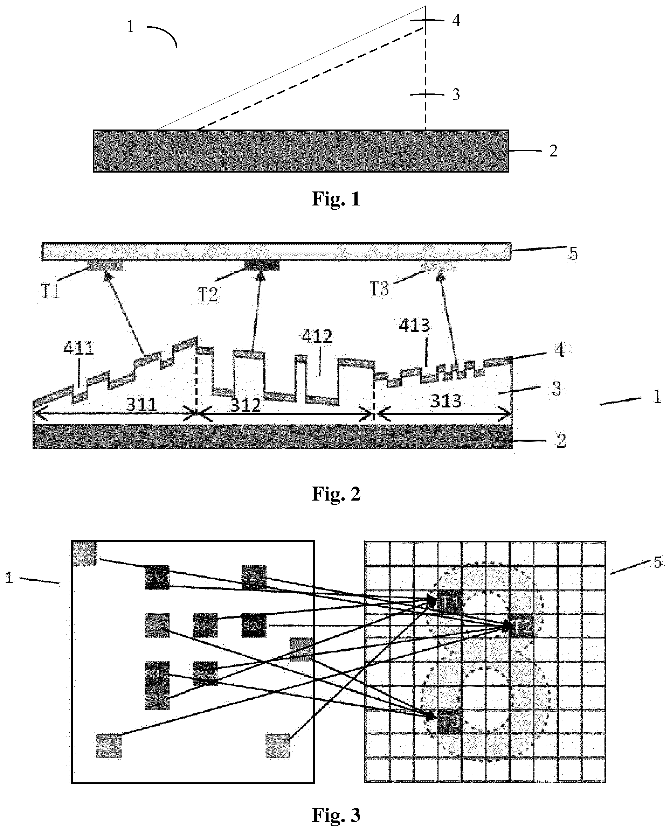

Fig. 1 shows a structural schematic diagram of an optical anti-counterfeiting element 1 provided by an embodiment of the disclosure. The optical anti-counterfeiting element 1 may include: a substrate 2; a reflective facet 3, there are a plurality of reflective facets 3 (represented by dotted lines) formed on the substrate 2, which are used for reflecting and/or transmitting an incident light to a preset position, so as to appear a preset graphic and text information at the preset position; and a color modulation structure 4 formed on the reflective facet 3, which is used for modulating a color of light reflected and/or transmitted by the reflective facet 3, so as to appear the preset graphic and text information in a preset color.

It should be noted that a cross section of the above reflective facet 3 may be linear and non-linear, that is, the cross section of the reflective facet 3 may be a smooth bevel (i.e. plane) without variation in curvature, or with a certain degree of curvature (i.e. curved surface, e.g., paraboloid, circular arc or part of other shapes having curvature) .

In order to achieve a characteristic of reflection/transmission focusing and effectively avoid the condition that diffraction interferes definition of the reproduced image, a lateral characteristic dimension of the reflective facet ranges from $0.5\mu m$ to $500\mu m$, more specifically, ranges from $30\mu m$ to $200\mu m$. Particularly, within the more specific dimension range, even if there is a weak diffraction phenomenon, a $\pm 1$-order diffraction angle of the reflective facet is close to a 0-order reflected light, a distance is very close, and the $\pm 1$-order diffraction angle basically coincides with the 0-order reflected light. The reproduced image is formed by 0-order reflected/transmitted light, and therefore, the reproduced image formed by a microstructure within the above dimension range is definite without diffraction interference.

The diffraction phenomenon is basically avoided due to a large dimension of the reflective facet, and therefore, the reflective facet satisfies a Fresnel reflection/transmission formula when plane waves are incident. Specifically, inclination angles and azimuth angles of the plurality of reflective facets 3 may be determined by a Fresnel formula, wherein the Fresnel formula is related to a preset incident angle of the incident light (referring to an included angle between the incident light and a plane in which the substrate is located) and the preset position. Thus, incident angles and azimuth angles of a group of reflective facets may be determined by means of the preset incident angle of the incident light and the preset position, and then the group of reflective facets are designed according to the determined inclination angles and azimuth angles, such that under the condition that the designed group of reflective facets are irradiated by white light having the preset incident angle, a pixel may be appeared at the preset position, and a plurality of groups of reflective facets (satisfying the same Fresnel formula as the above group of reflective facets) are arranged according to a specific arrangement rule, such that the preset graphic and text information may be appeared at the preset position.

An optical anti-counterfeiting element 1 shown in Fig. 2 includes at least three different reflective facets 311, 312, 313 (cross sections of which are of a bevel cut type, thereby forming a micro mirror), and inclination angles (or orientations) of the three different reflective facets are different, thereby forming pixel points at three different positions T1, T2, T3 of a receiving screen 5. Thus, similarly, complex images having practical significance may be achieved by designing the inclination angles and the azimuth angles of the reflective facets and designing distribution of the plurality of groups of reflective facets purposefully.

As shown in Fig. 3, an optical anti-counterfeiting element 1 has different reflective facet groups, for example, reflective facet groups S1 (including S1-1, S1-2, S1-3 and S1-4), S2 (S2-1, S2-2, S2-3, S2-4 and S2-5) and S3 (S3-1, S3-2 and S3-3), wherein four reflective facets of the reflective facet group S1 reflect and focus the incident light to a position T1 of the receiving screen 5 to form a pixel T1 of a reflected projection image '8', and similarly, four reflective facets of the reflective facet group S2 reflect and focus the incident light to a position T2 of the receiving screen 5 to form a pixel T2 of the reflected projection image '8'; and four reflective facets of the reflective facet group S3 reflect and focus the incident light to a position T3

of the reflected projection image '8'. The reflective facets of the reflective facet groups S1, S2, S3 are randomly distributed in the optical anti-counterfeiting element 1. By parity of reasoning, the optical anti-counterfeiting element 1 provides a sufficient number of reflective facet groups, which may form a sufficient number of pixels at a reflection position, and positions in which the pixels are located finally form a graphic and text having specific meaning, for example, the number '8', thereby achieving reproduction of an image.

Therefore, a spatial location of focus points may be modulated by means of structural parameters of the reflective facets (e.g., orientation, including the inclination angle and the azimuth angle). If each focus point is arranged in a plane parallel to the optical anti-counterfeiting element, a plane reproduced image may be formed; and if each focus point is arranged within the whole space, a stereoscopic reproduced image may be formed.

If there are only the reflective facets, the reproduced image may only be in a form of a gray scale to achieve a simple 'black-gray-white' image. In order to enrich an information amount of the reproduced image, improve anti-counterfeiting capability by increasing technical difficulty and facilitate public observation, the disclosure arranges a 'color modulation structure' on the reflective facet, and achieves colorization of reproduction by reflection and/or transmission by means of a preset physical principle. Specifically, control of the color may be achieved by changing parameters of the color modulation structures 4, e.g., characteristic dimension, depth, etc., thereby achieving the customized color, thus, the reproduced preset graphic and text information may be monochromatic, colored or even gradient.

As shown in Fig. 2, there are three color modulation structures with different depths 411, 412, and 413 on the reflective facet, and depths of the three color modulation structures are different, wherein a depth of the color modulation structure 411 is $0.35\mu m$, a depth of the color modulation structure 412 is $0.45\mu m$, and a depth of the color modulation structure 413 is $0.27\mu m$. When white light irradiates the optical anti-counterfeiting element 1, a combination of 'the reflective facet 3 + the color modulation structure 4' reflects and converges the incident light to different positions of the receiving screen 5 to appear pixels of different colors. Specifically, a green light spot is appeared at the position T1 corresponding to a combination of 311+411, a red light spot is appeared at the position T2 corresponding to a combination of 312+412, and a yellow light spot is appeared at the position T3 corresponding to a combination of 313+413. Therefore, pixels of three different colors are appeared in the same reproduced image by reflection.

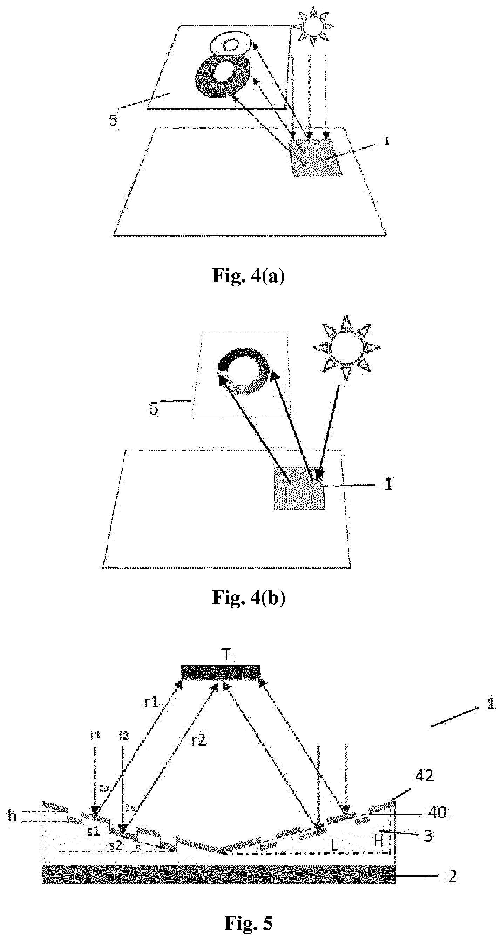

Therefore, a specific graphic and text information having a specific color may be formed by designing characteristic parameters of the reflective facet 3 and the color modulation structure. Fig. 4 (a) and Fig. 4 (b) show multi-color patterns implemented, wherein one gray scale represents one color. It may be seen from the figures that the multi-color pattern may be displayed, and positions of different colors are accurately positioned. There is no mutual overlap or distance between two colors, and as shown in Fig. 4 (a), an upper half and a lower half of a number '8' of a reproduced pattern by reflection have two colors. If desired by design, a color gradient effect without obvious color boundaries may further be formed, which is similar to an iridescence effect, and as shown in Fig. 4(b), colors at different positions of an annulus of the reproduced pattern by reflection are different.

The specific condition of the color modulation structure 4 is described below in two embodiments.

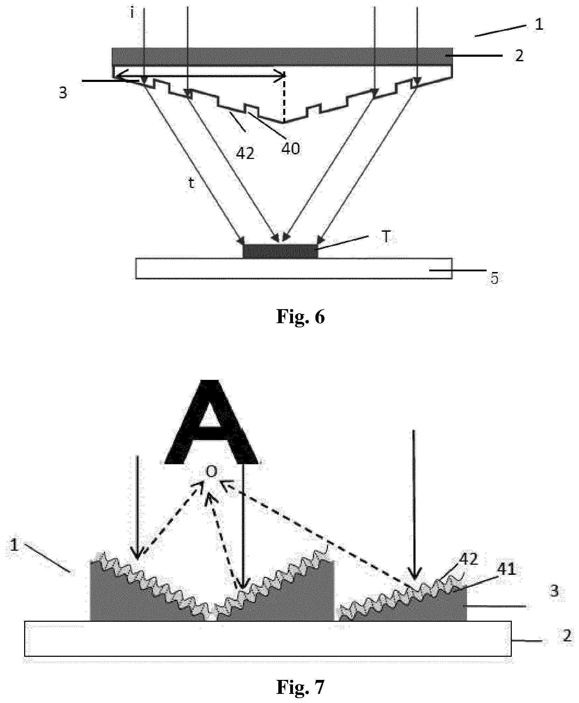

In an embodiment, the color modulation structure 4 may include: a microstructure 40 having steep sidewalls; and a metal film 42 having a preset thickness, which is as shown in Fig. 5 or 6. The microstructure 40 having steep sidewalls may be a one-dimensional grating or a two-dimensional grating, and a characteristic dimension of the microstructure 40 in an x-direction and/or a y-direction ranges from $0.5\mu m$ to $100\mu m$, more specifically, ranges from $1\mu m$ to $20\mu m$. A depth of the microstructure 40 having steep sidewalls in a z-direction ranges from $0.05\mu m$ to $10\mu m$, more specifically, ranges from $0.1 \mu m$ to $3\mu m$.

An optical principle of imaging of an optical anti-counterfeiting element shown in Figs. 5 and 6 is described below.

As shown in Fig. 5, with a reflection case as an example, when there is no metal layer on the microstructure 40 having steep sidewalls, a reflectivity of the optical anti-counterfeiting element is generally less than 20%, and therefore, both saturation and brightness of the color of a reproduced image by reflection are low. In order to improve the saturation and the brightness of the color of the reproduced image, under the condition of reflection reproduction, a preset thickness of the metal film 42 is not 0, and the metal film 42 having the preset thickness may improve the reflectivity to 80% or more, or even 90%.

A reflective facet in Fig. 5 has a lateral characteristic dimension L of $70\mu m$, a height H of 2nm, and an inclination angle a=arctg(H/L) of a bevel, the microstructure 40 having steep sidewalls has a depth h of $0.37\mu m$, and the metal film 42 is an aluminum film having a preset thickness of 30nm. When two beams of incident light i1 and i2 are incident on surfaces s1 and s2, the incident light is reflected by the metal film 42 on the surfaces s1 and s2 of 'reflective facet 3+microstructure 40 having steep sidewalls' to form reflected lights r1 and r2; and an included angle between the reflected light r1 and the incident light i1 corresponding thereto is $2\alpha$, and similarly, an included angle between the reflected light r2 and the incident light i2 corresponding thereto is also $2\alpha$. If there is no microstructure 40 having steep sidewalls on the reflective facet 3, the reflective facet 3 is of a traditional micro mirror structure, optical paths between the reflected lights after white light incidence are the same, there is no optical path difference, and therefore phases between the reflected lights are the same, there is no interference phenomenon, and the reflected light is still white light. However, after the microstructure 40 having steep sidewalls is attached to the reflective facet 3, there is a vertical height difference between an upper surface and a lower surface of the microstructure 40 having steep sidewalls, and therefore, the optical paths of the reflected lights r1 and r2 change, and the optical path difference occurs, such that an interference phenomenon occurs between the reflected lights r1 and r2, and finally, a reflected light having a specific color is acquired in a reflection direction, for example, the color in the embodiment may be yellow. When the reflective facets 3 satisfying a same Fresnel reflection formula at other positions reflect the white light to the same position, the white light appears a yellow color, that is, lights reflected by all the reflective facets 3 satisfying the same Fresnel reflection formula form a focus point T at the same position, and the focus point T is a pixel forming a pattern, and the pixel is yellow.

As shown in Fig. 6, with a transmission case as an example, if the reflective facet 3 and the microstructure 40 having steep sidewalls are made of transparent materials (which has a low reflection rate and a low absorption rate), more lights are transmitted through the reflective facet 3 and the microstructure 40 having steep sidewalls, that is, the optical anti-counterfeiting element has a high transmittance. In this case, the metal film 42 may not be added, that is, the reflective facet 3 is directly exposed to air.

The reflective facet 3 in Fig. 6 has a lateral characteristic dimension of $40\mu m$ and an inclination angle of $10°$; and a lateral characteristic period of the microstructure having steep sidewalls is varied between $3\mu m$ and $10\mu m$, and the microstructure having steep sidewalls has a depth of $1.2\mu m$. Similarly to the reflection case, when an incident light i is incident on the optical anti-counterfeiting element 1, a transmitted light t is converged on the receiving screen 5 by means of a combined action of the reflective facet 3 and the microstructure 40 having steep sidewalls, so as to form a yellow light spot (or pixel). The difference between the transmission case and the reflection case lies in that: in reflection reproduction, when light is modulated by the microstructure having steep sidewalls, an optical path difference between two beams of light reflected by a top and a bottom of the microstructure is related to factors of two times of the depth of the microstructure, whether there is a filling material on the surface of the microstructure, refractivity of the filling material, etc.; and in transmission reproduction, the surface of the microstructure cannot be filled with the filling material generally, such that the optical path difference of the two beams of light passing through the top and the bottom of the microstructure is related to one time of the depth of the microstructure. Thus, in order to be able to appear the same color as in the reflection reproduction, the depth of the microstructure in the transmission reproduction is greater than the depth of the microstructure in the reflection reproduction by a ratio of about 2n, wherein n is the refractivity of the filling material in reflection reproduction, and n=1 in the absence of the filling material. Of course, by designing the thickness of the metal film, colored graphic and text information may further be reproduced in the reflection direction and the transmission direction at the same time, which is not described herein.

By properly designing orientation (inclination angle and/or azimuth angle) of the reflective facet 3 and parameters (e.g., depth) of the color modulation structure 4, pixel points of different colors may be appeared at different positions, and the pixel points form graphic and text information having practical significance. The above reflective facet 3 and the above color modulation structure 4 may be randomly distributed, that is, under the condition of diffuse reflection illumination, the above pattern requiring to be reproduced may not be observed, only when illuminated by the light, the colored reproduced graphic and text information may be observed from the reflection and/or the transmission direction.

In another embodiment, the color modulation structure 4 may include a sub-wavelength microstructure 41; and a metal film 42 having a preset thickness, which is as shown in Fig. 7. In order to satisfy a plasma absorption condition, the metal film requires to be evaporated or sputtered on the surface of the sub-wavelength microstructure. By combining the reflective facet 3 with the color modulation structure 4, a plasma reflective facet may be formed. The plasma reflective facet has a plasma resonance absorption characteristic, so that appear a hidden image appears a specific color.

The sub-wavelength microstructure 41 may be a one-dimensional grating or a two-dimensional grating, wherein grid distribution of the two-dimensional grating may be an orthogonal structure, a honeycomb structure, a two-dimensional bravais lattice structure, a random structure, etc.; and a groove type of the sub-wavelength microstructure may be sinusoidal, rectangular, zigzag, etc. It should be understood that the sub-wavelength microstructure 41 is not limited to the structures described above, and a splice or combination of these sub-wavelength microstructures may be used in the practical optical anti-counterfeiting element. In an embodiment , the sub-wavelength microstructure 41 is the two-dimensional grating.

A reflectance spectrum reflected by the sub-wavelength microstructure 41 may be obtained according to a coupled wave theory, and the depth (or groove depth), the period, the groove type and the metal film of the sub-wavelength microstructure 41 by computational simulation analysis may influence a resonance absorption wavelength of the reflective spectrum. Especially, an influence of a depth of the groove is particularly obvious.

It should be noted that a lateral characteristic dimension of the reflective facet 3 is much greater than a lateral characteristic dimension of the sub-wavelength microstructure 41. According to a plasma resonance condition, characteristic parameters of the sub-wavelength microstructure may be obtained. With the one-dimensional grating as an example, when an incident light is incident on the grating at an angle θ, diffracted lights of different orders may be generated, and when the diffracted lights propagate on a surface of the grating, resonance is generated with surface plasma waves excited on the surface of the metal film, that is, wave vectors are equal.

$$k_x{}^m = k_{sp} \qquad (1)$$

$$k_{sp} = k_0 \sqrt{\frac{\varepsilon_1 n_1{}^2}{\varepsilon_1 + n_1{}^2}} \qquad (2)$$

$$k_x{}^m = k_x + m \times k_d \qquad (3)$$

$$k_d = \frac{2\pi}{d} \qquad (4)$$

$$k_x = \frac{2\pi}{\lambda_0} \times sin\theta \qquad (5)$$

$$k_0 = \frac{2\pi}{\lambda_0} \qquad (6)$$

$$n_1 = \sqrt{\varepsilon_0} \qquad (7)$$

Wherein a diffraction order is m, a component of the incident light in an x-direction of the surface of the grating is $k_x$, the wave vector of the grating is $k_d$, a component of the diffracted light in the x-direction of the surface of the grating is $k_x{}^m$, and the wave vector of the surface plasma waves excited on the surface of the metal film is $k_{sp}$. θ is an incident angle of the incident light when resonance is caused, $\lambda_0$ is a wavelength in vacuum, $n_1$ is refractivity of the metal film, $\varepsilon_0$ is a dielectric constant of the incident light in a medium, and $\varepsilon_1$ is a dielectric constant of the metal film.

A relationship between the period d and a plasma resonance wavelength of the sub-wavelength grating structure may be obtained by substituting formulas (2)-(7) into formula (1):

$$d = \frac{m}{\sqrt{\frac{\varepsilon_1 n_1{}^2}{\varepsilon_1 + n_1{}^2}} - n_1} \times \lambda_0 \qquad (8)$$

The period d of the sub-wavelength grating structure may be obtained from formula (8).

In order to achieve a plurality of colors, the period of the above two-dimensional sub-wavelength microstructure is variable, and the period in the x-direction and/or y-direction (i.e. lateral characteristic dimension) ranges from 50nm to 700nm, more specifically, ranges from 200nm to 400nm. In an embodiment, the depth of the groove of the sub-wavelength microstructure ranges from 10nm to 500nm, and more specifically, the depth of the groove of the sub-wavelength microstructure ranges from 50nm to 100nm.

A preset thickness of the metal film 42 is less than 50nm, more specifically, less than 20nm. The metal film 42 includes at least one of a metal layer, a metal compound layer, a high/low refractivity material stack, and a Fabry-Perot interferometer. The metal film may be formed by one or more of gold, silver, copper, aluminum, iron, tin, zinc, nickel, chromium, etc. In an embodiment, the metal film 42 may be an aluminum layer formed by evaporation and has a thickness of 30nm. Of course, a single dielectric layer or multiple dielectric layers may be evaporated before the metal film 42 is evaporated. A used dielectric material may be selected from one or more of $MgF_2$, $SiO_2$, $Al_2O_3$, MgO, PMMA, $TiO_2$, ZnS and ZnO, and a multilayer dielectric film generally uses a high-low-high film system design. More specifically, $SiO_2$ is used, a three-layer structure is evaporated, and an optical variation color is varied from yellow to green. For the three layers of $SiO_2$ formed on a two-dimensional grating region, the optically variable color is varied from red to green; and for three layers of $SiO_2$ formed directly on the reflective facet, the optical variation color is varied from yellow to green.

The sub-wavelength microstructure 41 or the microstructure 42 having steep sidewalls (both of which may be abbreviated as microstructures) may be periodic in the x-direction and the y-direction, may also have periodicity within a certain range, or may also be random. 'Period' means that all the microstructures have the same arrangement rules and parameters within the scope of the whole optical anti-counterfeiting element. 'Having periodicity within a certain range' means that the microstructures have the same arrangement rules and parameters within a certain small range, but do not have the same arrangement rules and parameters within the range of the whole optical anti-counterfeiting element. 'Random' means that shape parameters and arrangement of the microstructures have no the same rule, and the microstructures are randomly distributed.

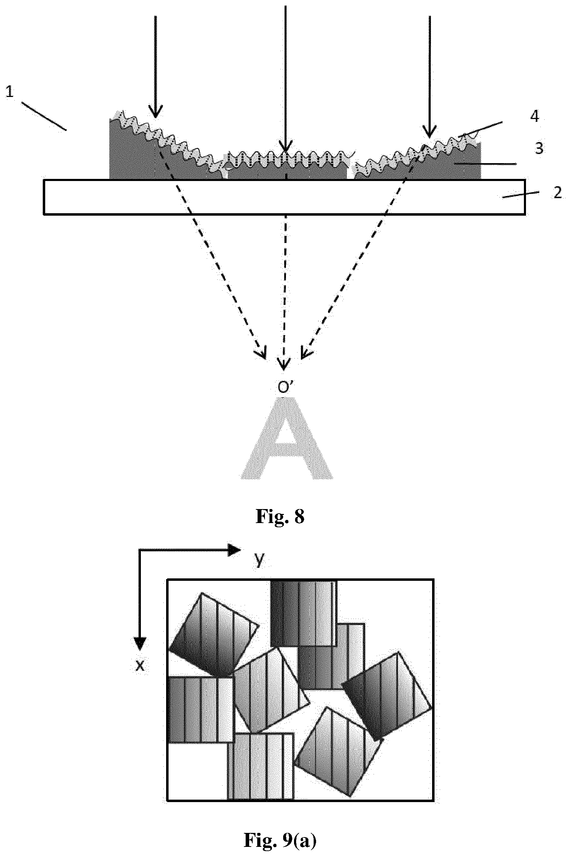

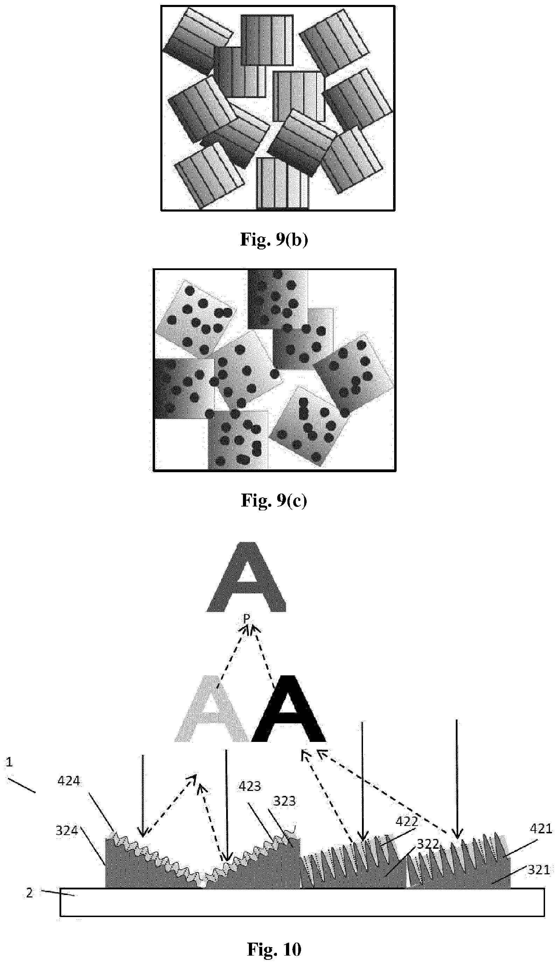

Several arrangement manners of microstructures capable of achieving colored reproduced images will be listed below, which is as shown in Figs. 9(a)-9(c). Wherein squares gradually varied from black to white in Figs. 9(a)-9(c) represent reflective facets, black represents a lower height, and white represents a higher height, that is, the reflective facets are small bevels having a characteristic dimension of 49μm. It may be seen from the figures that orientation of the reflective facet is varied (which may be varied according to content of an image requiring to be reproduced). In Fig. 9(a), the microstructure is invariable in an x-direction with/without variations in sequence periodically in a y-direction, and has periodicity as a whole with a period of 5μm. Fig. 9 (b) shows another arrangement manner of the microstructure, in which no microstructures on the reflective facets are periodic, but the microstructures on different reflective facets are different, which may inhibit diffraction interference caused by periodicity of the microstructures in Fig. 9 (a) to a certain extent, and enhances definition of the colored reproduced image. The microstructures in Fig. 9(c) are circular structures, and positions of the circular structures are randomly varied.

Specifically, a specific structure and an imaging result of an optical anti-counterfeiting element are described in detail below by means of eight embodiments. In various embodiments, a reflective facet has a preferred lateral characteristic dimension of 25μm and a longitudinal characteristic dimension preferably ranging from 0.5μm-4μm. The reflective facet is of a plane structure, and a sub-wavelength microstructure is of a two-dimensional grating structure.

After being reflected by a reflective facet group, plane waves are propagated to a reproduced image region on a receiving screen. Assuming that the reflective facet group includes 10000 reflective facets and the number of pixels of a reproduced image is 100, so that a hidden image of 1 pixel is reproduced per 100 reflective facets, and 100 pixels are randomly distributed. For simplicity of illustration, only several reflective facets are listed in structural diagrams of optical anti-counterfeiting elements corresponding to the various embodiments.

Embodiments 1 and 2

A plurality of reflective facets may be a first group of reflective facets, and inclination angles and azimuth angles of the first group of reflective facets are determined by a first Fresnel formula, wherein the first Fresnel formula is related to a first preset incident angle of an incident light and a first preset position. Thus, the first group of reflective facets is used for reflecting and/or transmitting the incident light having the first preset incident angle to the first preset position, so as to appear a first preset graphic and text information at the first preset position. The color modulation structure may be a first color modulation structure having a first modulation depth, and is used for appearing the first preset graphic and text information in a first preset color.

A real image of the first preset graphic and text information having the first preset color may be appeared at the first preset position under the condition that the incident light having the first preset incident angle irradiates the optical anti-counterfeiting element.

With regard to Embodiment 1

The optical anti-counterfeiting element in Embodiment 1 (as shown in Fig. 7) may achieve a monochromatic image reproduced by reflection. Wherein a sub-wavelength microstructure is covered with an aluminum layer having a thickness of 30nm, which may have an effect of reflection enhancement.

Inclination angles and azimuth angles of the three reflective facets in Fig. 7 satisfy the same Fresnel reflection formula (the first preset position is a point O, and the first preset incident angle is 90°), and by designing distributi on of a plurality of combinations composed of the above three reflective facets, the first preset graphic and text information A may be appeared at the point O. Thus, the incident light (e.g., white light) having an incident angle of 90° may be reflected and focused at the point O, and appears a real image of an image A. Moreover, the sub-wavelength microstructures on the different reflective facets are the same (120nm in depth), and thus, the sub-wavelength microstructures may modulate light reflected by the reflective facets into light having the same color (e.g., red), thereby appearing the monochromatic (e.g., red) image A at the point 0.

In addition, from the whole optical design, when the light is incident, an extension line of refracted light has a certain convergence, thereby forming an image A (not shown). The image A is close to a substrate (which may be seen as a surface of the substrate) and is a virtual image; and the virtual image A is located on an opposite side of the real image A relative to the reproduced real image A.

With regard to Embodiment 2

The difference between Embodiments 2 and 1 lies in that the optical anti-counterfeiting element in Embodiment 2 (as shown in Fig. 8) may achieve a monochromatic image reproduced by transmission.

In order to satisfy a plasma absorption condition, a metal layer requires to be evaporated or sputtered on a surface of the sub-wavelength microstructure, but the metal layer is a reflecting layer, such that brightness of a transmission image may be reduced. Thus, the metal layer requires to satisfy a certain thickness requirement, such that a hidden image reproduced by transmission may be achieved. In other words, if a thickness of the metal layer is too large, the reproduced image may not be observed in a transmission direction even if there is plasma absorption. When the thickness of the metal layer is constant, the reflective facet having a plasma has a higher transmittance than the reflective facet without a plasma. In the embodiment, the sub-wavelength microstructure is covered with an aluminum layer having a thickness of 15nm.

Inclination angles and azimuth angles of the three reflective facets in Fig. 8 satisfy the same Fresnel transmission formula (the first preset position is a point O', and the first preset incident angle is 90°), and by designing distribution of a plurality of combinations composed of the above three reflective facets, the first preset graphic and text information A may be appeared at the point O'. Thus, the incident light (e.g., white light) having an incident angle of 90° may be transmitted and focused at the point O', and appears a real image of an image A. Moreover, the sub-wavelength microstructures on different reflective facets are the same, and thus, the sub-wavelength microstructures may modulate light transmitted by the reflective facets into light having the same color, thereby appearing the monochromatic image A at the point O'.

In addition, from the whole optical design, when the light is incident, an extension line of reflected light has a certain convergence, thereby forming the image A (not shown). The image A is close to a substrate (which may be seen as a surface of the substrate) and is a virtual image; and the virtual image A is located on an opposite side of the real image A relative to the reproduced real image A. Moreover, a color (e.g., blue) of the image A reproduced by transmission is complementary to a color (e.g., red) of the image A reproduced by reflection.

Embodiments 3 and 4

A plurality of reflective facets may be a second group of reflective facets, and inclination angles and azimuth angles of the second group of reflective facets are determined by a second Fresnel formula, the second Fresnel formula is related to a second preset incident angle of an incident light and a second preset position. Thus, the second group of reflective facets is used for reflecting and/or transmitting the incident light having the second preset incident angle to the second preset position, so as to appear a second preset graphic and text information at the second preset position. The color modulation structures may include a second color modulation structure having a second modulation depth, which is used for appearing the second preset graphic and text information in a second preset color; and a third color modulation structure having a third modulation depth, which is used for appearing the second preset graphic and text information in a third preset color, the second modulation depth is different from the third modulation depth.

A real image of the second preset graphic and text information having a comprehensive color effect composed of the second preset color and the third preset color is appeared at the second preset position, and/or a virtual image of the second preset graphic and text information having a comprehensive color effect composed of two different colors is appeared at a surface of the optical anti-counterfeiting element under the condition that the incident light having the second preset incident angle irradiates the optical anti-counterfeiting element.

With regard to Embodiment 3

The optical anti-counterfeiting element (as shown in Fig. 10) in Embodiment 3 may achieve an image reproduced by reflection having a comprehensive color effect of two colors. Wherein a sub-wavelength microstructure is a two-dimensional grid structure, and depths of the sub-wavelength microstructures are different. Characteristic dimensions of a sub-wavelength microstructure 421 on a reflective facet 321 and a sub-wavelength microstructure 422 on a reflective facet 322 are both as follows: a period is 300nm, and a depth is 120nm, and the part of the optical anti-counterfeiting element reflects and focuses red pixels under white light; and characteristic dimensions of a sub-wavelength microstructure 423 on a reflective facet 323 and a sub-wavelength microstructure 424 on a reflective facet 324 are as follows: a period is 300nm, and a depth is 150nm, and the part of the optical anti-counterfeiting element reflects and focuses blue pixels under white light. The sub-wavelength microstructure is covered with an aluminum layer having a thickness of 30nm, which may have an effect of reflection enhancement.

The four reflective facets satisfy the same Fresnel reflection formula (the second preset position is a point P, and the second preset incident angle is 90°), and by designing distribution of a plurality of combinations composed of the above four reflective facets, the second preset graphic and text information A may be appeared at the point P. Thus, the incident light (e.g., white light) having an incident angle of 90° may be reflected and focused at the point P, and appears a real image of an image A. Moreover, the sub-wavelength microstructures 421, 422 may modulate light reflected by the reflective facets 321, 322 into red light respectively; and the sub-wavelength microstructures 423, 424 may modulate light reflected by the reflective facets 323, 324 into blue light respectively, thereby appearing the image A (the image A is a real image) of a mixed color of red and blue at the point P. Meanwhile, from a transmission direction, the image A (not shown, the image A is a virtual image converged by an extension line of refracted light) of the mixed color of red (complementary to blue observed in a reflection direction) and blue (complementary to red observed in the reflection direction) is appeared at a position (which may be seen as a surface of the optical anti-counterfeiting element) close to a substrate (compared with the point P).

Of course, two groups of reflective facets satisfying different Fresnel reflection formulas may be designed, such that images appeared are different.

With regard to Embodiment 4

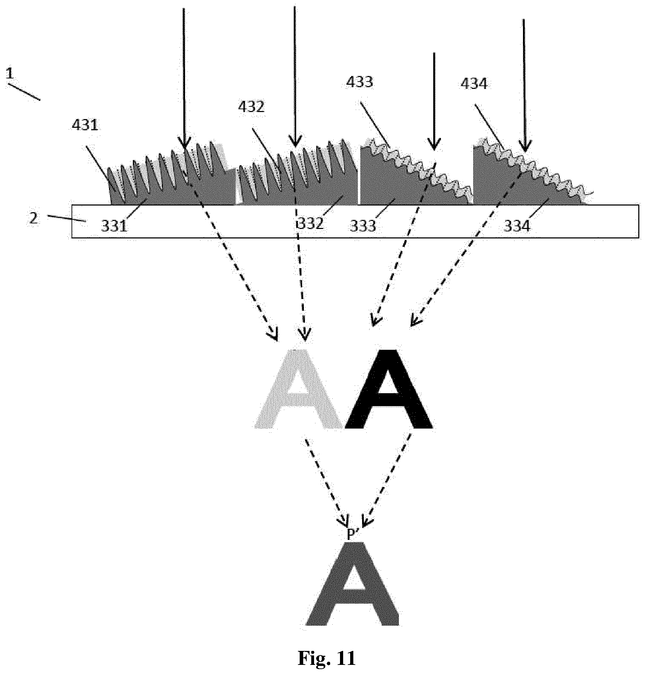

The difference between Embodiments 4 and 3 lies in that the optical anti-counterfeiting element (as shown in Fig. 11) in Embodiment 4 may achieve a image reproduced by transmission having a comprehensive color effect of two colors. A sub-wavelength microstructure in Embodiment 4 is covered with an aluminum layer having a thickness of 15nm.

Inclination angles and azimuth angles of the four reflective facets in Fig. 11 satisfy the same Fresnel transmission formula (the second preset position is a point P', and the second preset incident angle is 90°), and the secon d preset graphic and text information A may be appeared at a point P'; and by designing distribution of a plurality of combinations composed of the four reflective facets, the second preset graphic and text information A may be appeared at the point P'. Thus, the incident light (e.g., white light) having an incident angle of 90° may be transmitted and focused at the point P', and appears a real image of an image A. Moreover, the sub-wavelength microstructures 431, 432 may modulate light reflected by the reflective facets 331 and 332 into blue light respectively; and the sub-wavelength microstructures 433, 434 may modulate light reflected by reflective facets 333, 334 into red light respectively, thereby appearing the image A (the image A is a real image) of a mixed color of red and blue at the point P'. Meanwhile, from a transmission direction, the image A (not shown, the image A is a virtual image converged by an extension line of reflected light) of the mixed color of red (complementary to blue observed in a reflection direction) and blue (complementary to red observed in the reflection direction) is appeared at a position (which may be seen as a surface of the optical anti-counterfeiting element) close to a substrate (compared with the point P').

Of course, two groups of reflective facets satisfying different Fresnel transmission formulas may be designed, such that images appeared are different.

Embodiments 5 and 6

A plurality of reflective facets include a third group of reflective facets and a fourth group of reflective facets, inclination angles and azimuth angles of a plurality of reflective facets in the third group of reflective facets are determined by a third Fresnel formula, and inclination angles and azimuth angles of a plurality of reflective facets in the fourth group of reflective facets are determined by a fourth Fresnel formula. The third Fresnel formula is related to a third preset incident angle of an incident light and a third preset position; and the fourth Fresnel formula is related to a fourth preset incident angle of an incident light and a fourth preset position, the third preset incident angle is different from the fourth preset incident angle, and the third preset position is different from the fifth preset position. Thus, the third group of reflective facets is used for reflecting and/or transmitting the incident light having the third preset incident angle to the third preset position, so as to appear a third preset graphic and text information at the third preset position; and the fourth group of reflective facets are used for reflecting and/or transmitting the incident light having the fourth preset incident angle to the fourth preset position, so as to appear a fourth preset graphic and text information at the fourth preset position. The color modulation structure is a fourth color modulation structure having a fourth modulation depth, and is used for appearing the third preset graphic and text information and the fourth preset graphic and text information in a fourth preset color.

A real image of the third preset graphic and text information having the third preset color is appeared at the third preset position under the condition that the incident light having the third preset incident angle irradiates the optical anti-counterfeiting element, and/or a real image of the fourth preset graphic and text information having the fourth preset color is appeared at the fourth preset position under the condition that the incident light having the fourth preset incident angle irradiates the optical anti-counterfeiting element.

With regard to Embodiment 5

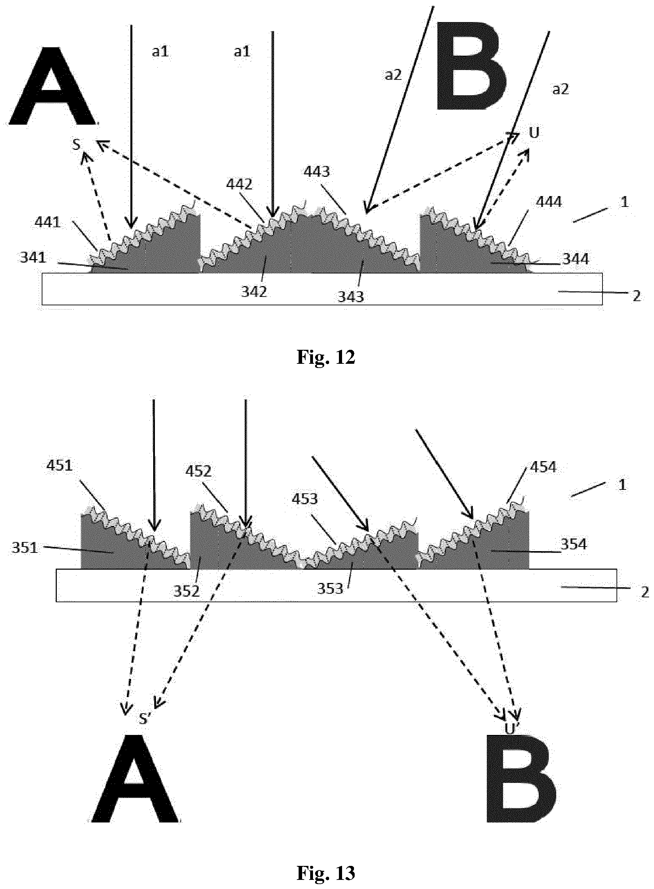

The optical anti-counterfeiting element (as shown in Fig. 12) in Embodiment 5 may reproduce images A and B in sequence in a direction of reflected light by varying incident directions a1 and a2 of white light. Wherein a sub-wavelength microstructure is covered with an aluminum layer having a thickness of 30nm, which may have an effect of reflection enhancement. The sub-wavelength microstructures on different reflective facets are the same, and thus, the sub-wavelength microstructures may modulate light reflected by the reflective facets into light having the same color, thereby appearing the monochromatic images A and B.

The reflective facets 341, 342 satisfy the same Fresnel reflection formula (the third preset position is a point S, and the third preset incident angle is 90°); and the reflective facets 343, 344 satisfy the same Fresnel reflection formula (the fourth preset position is a point U, and the fourth preset incident angle is 45°). Thus, the third preset graphic and text information A may be appeared at the point S by designing distribution of a plurality of combinations composed of the above reflective facets 341, 342; and the fourth preset graphic and text information B may be appeared at the point U by designing distribution of a plurality of combinations composed of the above reflective facets 343, 344. Specifically, in the Fresnel reflection formula, when an incident angle is 90° and 45°, a slope and an azimuth angle of the reflective facet are calculated to obtain two different groups of parameters, then 1/2 of each group of parameters is selected to reconstitute design parameters, and a distribution rule is random. For example, when the incident angle is 90° 100*100 reflective facets are generated, which may reproduce the image A; when the incident angle is 45°, 100*100 reflective facets are generated, which may reproduce the image B; and then, 50*100 reflective facets are selected respectively to form new 100*100 reflective facets. Thus, incident light (e.g., white light) having the incident angle of 90° may be reflected and focused at the point S, and appears a real image of the image A; and incident light (e.g., white light) having the incident angle of 45° may be reflected and focused at the point U, and appears a real image of the image B.

Similarly to the case of Embodiments 1 and 3 described above, in Embodiment 5, from a transmission direction, a virtual image A or B (not shown) is appeared on a surface of the optical anti-counterfeiting element, and a color of the virtual image A or B is complementary to a color of the real image A or B observed in a reflection direction.

With regard to Embodiment 6

The difference between Embodiments 6 and 5 lies in that the optical anti-counterfeiting element (as shown in Fig. 13) in Embodiment 6 may reproduce images A and B in sequence in a direction of transmitted light by varying incident directions a1 and a2 of white light. A sub-wavelength microstructure in Embodiment 6 is covered with an aluminum layer having a thickness of 15nm.

The reflective facets 351, 352 satisfy the same Fresnel transmission formula (the third preset position is a point S', and the third preset incident angle is 90°); and the reflective facets 353, 354 satisfy the same Fresnel transmission formula (the fourth preset position is a point U', and the fourth preset incident angle is 45°). Thus, the third preset graphic and text information A may be appeared at the point S' by designing distribution of a plurality of combinations composed of the above reflective facets 351, 352; and the fourth preset graphic and text information B may be appeared at the point U' by designing distribution of a plurality of combinations composed of the above reflective facets 353, 354. Specifically, in the Fresnel transmission formula, when an incident angle is 90° and 45°, a slope and an azimuth angle of the reflective facet are calculated to obtain two different groups of parameters, then 1/2 of each group of parameters is selected to reconstitute design parameters, and a distribution rule is random. Thus, incident light (e.g., white light) having the incident angle of 90° may be transmitted and fo cused at the point S', and appears a real image of the image A; and incident light (e.g., white light) having the incident angle of 45° may be transmitted and focused at the point U', and appears a real image of the image B.

Similarly to the case of Embodiments 2 and 4 described above, in Embodiment 6, from a reflection direction, a virtual image A or B (not shown) is appeared on a surface of the optical anti-counterfeiting element, and a color of the virtual image A or B is complementary to a color of the real image A or B observed in a transmission direction.

Of course, a plurality of parameters may be set for the incident angle, but the more the parameters of the incident angle are, the lower brightness of a reproduced image is, and there may be interference between images during reproduction. In addition, a reproduction effect may utilize the principle in Fig. 10, such that images having different colors may be reproduced at different focal planes.

Embodiments 7 and 8

A plurality of reflective facets include a fifth group of reflective facets and a sixth group of reflective facets, inclination angles and azimuth angles of a plurality of reflective facets in the fifth group of reflective facets are determined by a fifth Fresnel formula, and inclination angles and azimuth angles of a plurality of reflective facets in the sixth group of reflective facets are determined by a sixth Fresnel formula. The fifth Fresnel formula is related to a fifth preset incident angle of an incident light and a fifth preset position; and the sixth Fresnel formula is related to a fifth preset incident angle of an incident light and a sixth preset position, and a vertical distance from the fifth preset position to the substrate is different from a vertical distance from the sixth preset position to the substrate. Thus, the fifth group of reflective facets is used for reflecting and/or transmitting the incident light having the fifth preset incident angle to the fifth preset position, so as to appear a fifth preset graphic and text information at the fifth preset position; and the sixth group of reflective facets is used for reflecting and/or transmitting the incident light having the fifth preset incident angle to the sixth preset position, so as to appear a sixth preset graphic and text information at the sixth preset position. The color modulation structure is a fifth color modulation structure having a fifth modulation depth, and is used for appearing the fifth preset graphic and text information and the sixth preset graphic and text information in a fifth preset color.

A real image of the fifth preset graphic and text information having the fifth preset color is appeared at the fifth preset position, and a real image of the sixth preset graphic and text information having the fifth preset color is appeared at the sixth preset position under the condition that the incident light having the fifth preset incident angle irradiates the optical anti-counterfeiting element.

With regard to Embodiment 7

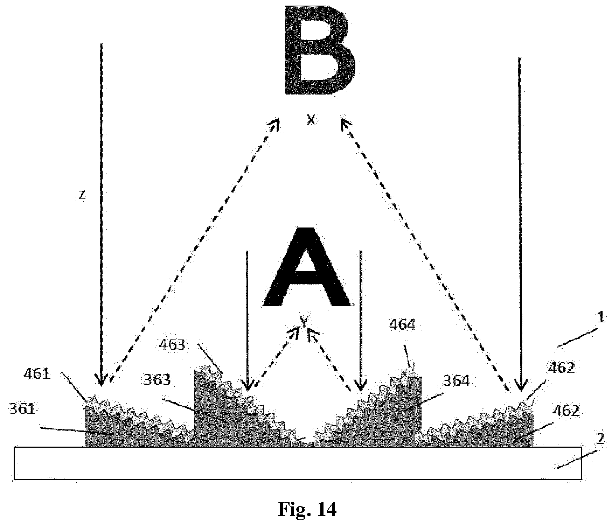

The optical anti-counterfeiting element (as shown in Fig. 14) in Embodiment 7 may appear images A and B at focal planes at different distances from a substrate in a direction of reflected light (e.g., 5cm and 10cm from the substrate). A sub-wavelength microstructure is covered with an aluminum layer having a thickness of 30nm, which may have an effect of reflection enhancement. Moreover, the sub-wavelength microstructures on different reflective facets are the same, and thus, the sub-wavelength microstructures may modulate light reflected by the reflective facet into light having the same color, thereby appearing the monochromatic images A and B.

The reflective facets 361, 362 satisfy the same Fresnel reflection formula (the fifth preset position is a point X, and the fifth preset incident angle is 90°); and the reflective facets 363, 364 satisfy the same Fresnel reflection formula (the sixth preset position is a point Y, and the fifth preset incident angle is 90°). Thus, the fifth preset graphic and text information B may be appeared at the point X by designing distribution of a plurality of combinations composed of the above reflective facets 361, 362; and the sixth preset graphic and text information A may be appeared at the point Y by designing distribution of a plurality of combinations composed of the above reflective facets 363, 364. Specifically, in the Fresnel reflection formula, when imaging focal positions are the point X (e.g., 10cm from a surface of the substrate) and the point Y (e.g., 5 cm from the surface of the substrate), a slope and an azimuth angle of the reflective facet are calculated to obtain two different groups of parameters, then 1/2 of each group of parameters are selected to reconstitute design parameters, and a distribution rule is random. Thus, incident light (e.g., white light) having an incident angle of 90° may be reflected and focused at the points X and Y, and appears real images of the images B and A respectively.

Similarly to the case of Embodiments 1, 3 and 5 described above, in Embodiment 7, from a transmission direction, virtual images A and B (not shown) are appeared on a surface of the optical anti-counterfeiting element, and colors of the virtual images A and B are complementary to colors of the real images A and B observed in a reflection direction.

With regard to Embodiment 8

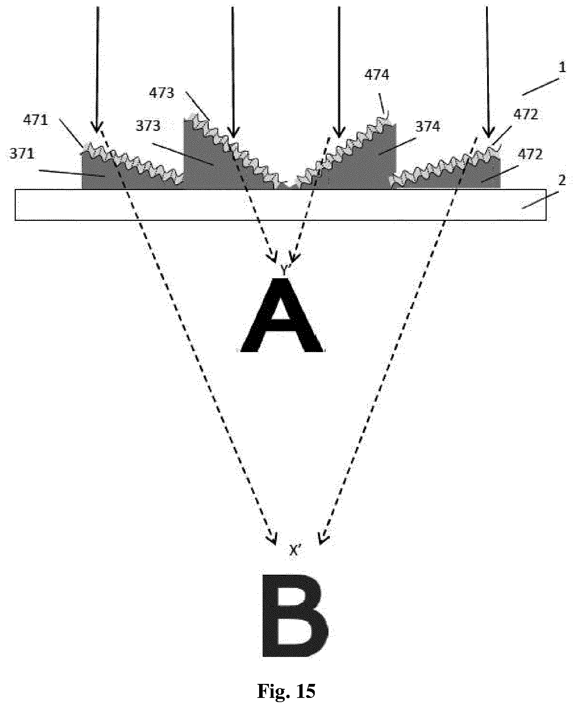

The difference between Embodiments 8 and 7 lies in that the optical anti-counterfeiting element (as shown in Fig. 15) in Embodiment 8 may appear images A and B at focal planes (e.g., 5cm and 10cm from a substrate) at different distances from the substrate in a direction of transmitted light. Due to a resonance absorption characteristic of a plasma, when white light irradiates the optical anti-counterfeiting element, the optical anti-counterfeiting element has a certain anti-reflection effect, and a color complementary to a color of a reflection-reproduced image in Embodiment 7 may be shown in a transmission direction. A sub-wavelength microstructure in Embodiment 8 is covered with an aluminum layer having a thickness of 15nm.

The reflective facets 371, 372 satisfy the same Fresnel transmission formula (the fifth preset position is a point X', and the fifth preset incident angle is 90°); and reflective facets 373, 374 satisfy the same Fresnel transmission formula (the sixth preset position is a point Y', and the fifth preset incident angle is 90°), Th us, the fifth preset graphic and text information B may be appeared at the point X' by designing distribution of a plurality of combinations composed of the above reflective facets 371, 372; and the sixth preset graphic and text information A may be appeared at the point Y' by designing distribution of a plurality of combinations composed of the above reflective facets 373, 374. Specifically, in the Fresnel transmission formula, when imaging focal positions are the point X' (e.g., 10cm from a surface of the substrate) and the point Y (e.g., 5cm from the surface of the substrate), a slope and an azimuth angle of the reflective facet are calculated to obtain two different groups of parameters, then 1/2 of each group of parameters are selected to reconstitute design parameters, and a distribution rule is random. Thus, incident light (e.g., white light) having an incident angle of 90° may be reflected an d focused at the points X' and Y', and appears real images of the images B and A respectively.

Similarly to the case of Embodiments 2, 4 and 6 described above, in Embodiment 8, from a reflection direction, virtual images A and B (not shown) are appeared on a surface of the optical anti-counterfeiting element, and colors of the virtual images A and B are complementary to colors of the real images A and B observed in the transmission direction.

Of course, the reproduction effect may utilize a principle in Fig. 12, such that different white light irradiation angles may reproduce different images. In addition, in the embodiment, the imaging color may further be modulated by varying the sub-wavelength microstructure, which is not described herein.

In addition, for the above various embodiments, the real image of the reproduced image may further be appeared in reflection and transmission directions at the same time by designing a reflective facet group satisfying the Fresnel reflection formula and the Fresnel transmission formula and selecting the metal film having a specific thickness, and specific design details may be described specifically in above reflection reproduction and transmission reproduction, which is not described herein.

A plate making manner of the above microstructure includes laser plate making and electron beam direct writing lithography plate making. Laser plate making has the advantages of high efficiency, fast speed and easy depth control, and has the disadvantage of insufficient accuracy. Electron beam direct writing lithography plate making has the advantage of high accuracy; and however, has the particularly obvious disadvantages of slow plate making speed, difficult control over the groove depth, and immature plate making process. The microstructures in various embodiments of the disclosure are made by laser plate making, thus, the reflective facets 321, 322 in Fig. 10 may reproduce one image, and the reflective facets 323, 324 may reproduce another image, thereby forming a reproduced macroscopic image having two colors.

When plate making process conditions are mature, a two-dimensional sub-wavelength depth of each independent reflective facet is accurately controlled, that is, a color of each pixel of the reproduced image may be accurately controlled to form a colorized image.

In order to make the above optical anti-counterfeiting element adapt to an existing product carrier commonly used, generally certain requirements are made for the dimension of a first structure. For example, a longitudinal dimension (i.e., height) of the reflective facet may not be too high, otherwise the reflective facet has a high thickness, such that the reflective facet may not be embedded into paper or attached to the carrier, resulting in an uneven consequence. Thus, the height of the reflective facet is generally less than 100μm, more specifically, less than 10μm, such that the reflective facet is applied to a windowing security line favorably, and is buried into the paper; or as a wide strip product, the reflective facet is pasted on the paper or a plastic substrate, and flatness of the substrate under the above two conditions may be kept.

To sum up, the disclosure creatively reflects and/or transmits the incident light to the preset position by means of the plurality of reflective facets, and modulates colors of reflected light and/or transmitted light by means of the color modulation structure, so as to appear the preset graphic and text information having the preset color at the preset position, and the colored preset pattern may be reproduced under the white light, thereby improving anti-counterfeiting capability and an identification degree, and achieving the optical anti-counterfeiting element which is 'easy to identify and difficult to counterfeit'.

The disclosure further provides an anti-counterfeiting product. The anti-counterfeiting product may include the above optical anti-counterfeiting element, wherein the optical anti-counterfeiting element may be placed into the above the anti-counterfeiting product in manners of windowing security line, windowing sticker, label, etc. The anti-counterfeiting product may include products of a banknote, an identity card, a bank card, a draft, a security, etc., which have high added value.

The specific embodiments of the disclosure are described in detail above with reference to the drawings. However, the disclosure is not limited to specific details of the above embodiments. Within the scope of the technical concept of the disclosure, various simple modifications may be made to the technical solution of the disclosure, and these simple modifications all fall within the scope of protection of the disclosure.

It should also be noted that various specific technical characteristics described in the above specific implementation may be combined in any suitable manner, without contradiction. In order to avoid unnecessary repetition, the disclosure will not be described separately for various possible combinations.

In addition, various different embodiments of the disclosure may also be combined randomly, so long as same do not deviate from the idea of the disclosure, and same should also be regarded as disclosed in the disclosure.

## Claims

1. An optical anti-counterfeiting element, comprising:

   a substrate;
   a reflective facet, there are a plurality of reflective facets formed on the substrate, which are used for reflecting and/or transmitting an incident light to a preset position, so as to appear a preset graphic and text information at the preset position; and
   a color modulation structure formed on the reflective facet, which is used for modulating a color of a light reflected and/or transmitted by the reflective facet, so as to appear the preset graphic and text information in a preset color.

2. The optical anti-counterfeiting element as claimed in claim 1, wherein inclination angles and azimuth angles of the plurality of reflective facets are determined by a Fresnel formula, the Fresnel formula is related to a preset incident angle of the incident light and the preset position.

3. The optical anti-counterfeiting element as claimed in claim 2, wherein the plurality of reflective facets are a first group of reflective facets, and inclination angles and azimuth angles of the first group of reflective facets are determined by a first Fresnel formula, the first Fresnel formula is related to a first preset incident angle of an incident light and a first preset position; the first group of reflective facets is used for reflecting and/or transmitting the incident light having the first preset incident angle to the first preset position, so as to appear a first preset graphic and text information at the first preset position;

   the color modulation structure is a first color modulation structure having a first modulation depth, and is used for appearing the first preset graphic and text information in a first preset color; and
   a real image of the first preset graphic and text information having the first preset color is appeared at the first preset position under the condition that the incident light having the first preset incident angle irradiates the optical anti-counterfeiting element.

4. The optical anti-counterfeiting element as claimed in claim 2, wherein the plurality of reflective facets are a second group of reflective facets, and inclination angles and azimuth angles of the second group of reflective facets are determined by a second Fresnel formula, the second Fresnel formula is related to a second preset incident angle of an incident light and a second preset position; the second group of reflective facets are used for reflecting and/or transmitting the incident light having the second preset incident angle to the second preset position, so as to appear a second preset graphic and text information at the second preset position; the color modulation structure comprises:

   a second color modulation structure having a second modulation depth, which is used for appearing the second preset graphic and text information in a second preset color; and

a third color modulation structure having a third modulation depth, which is used for appearing the second preset graphic and text information in a third preset color, the second modulation depth is different from the third modulation depth; and

a real image of the second preset graphic and text information having a comprehensive color effect composed of the second preset color and the third preset color is appeared at the second preset position under the condition that the incident light having the second preset incident angle irradiates the optical anti-counterfeiting element.

5. The optical anti-counterfeiting element as claimed in claim 2, wherein the plurality of reflective facets comprise a third group of reflective facets and a fourth group of reflective facets, inclination angles and azimuth angles of a plurality of reflective facets in the third group of reflective facets are determined by a third Fresnel formula, and inclination angles and azimuth angles of a plurality of reflective facets in the fourth group of reflective facets are determined by a fourth Fresnel formula, the third Fresnel formula is related to a third preset incident angle of an incident light and a third preset position, the fourth Fresnel formula is related to a fourth preset incident angle of the incident light and a fourth preset position, the third preset incident angle is different from the fourth preset incident angle, and the third preset position is different from the fourth preset position;

the third group of reflective facets is used for reflecting and/or transmitting the incident light having the third preset incident angle to the third preset position, so as to appear a third preset graphic and text information at the third preset position; the fourth group of reflective facets is used for reflecting and/or transmitting the incident light having the fourth preset incident angle to the fourth preset position, so as to appear a fourth preset graphic and text information at the fourth preset position;

the color modulation structure is a fourth color modulation structure having a fourth modulation depth, and is used for appearing the third preset graphic and text information and the fourth preset graphic and text information in a fourth preset color; and

a real image of the third preset graphic and text information having the third preset color is appeared at the third preset position under the condition that the incident light having the third preset incident angle irradiates the optical anti-counterfeiting element; and/or

a real image of the fourth preset graphic and text information having the fourth preset color is appeared at the fourth preset position under the condition that the incident light having the fourth preset incident angle irradiates the optical anti-counterfeiting element.

6. The optical anti-counterfeiting element as claimed in claim 2, wherein the plurality of reflective facets comprise a fifth group of reflective facets and a sixth group of reflective facets, inclination angles and azimuth angles of a plurality of reflective facets in the fifth group of reflective facets are determined by a fifth Fresnel formula, and inclination angles and azimuth angles of a plurality of reflective facets in the sixth group of reflective facets are determined by a sixth Fresnel formula, the fifth Fresnel formula is related to a fifth preset incident angle of an incident light and a fifth preset position, the sixth Fresnel formula is related to the fifth preset incident angle of an incident light and a sixth preset position, and a vertical distance from the seventh preset position to the substrate is different from a vertical distance from the eighth preset position to the substrate;

the fifth group of reflective facets is used for reflecting and/or transmitting the incident light having the fifth preset incident angle to the fifth preset position, so as to appear a fifth preset graphic and text information at the fifth preset position; the sixth group of reflective facets is used for reflecting and/or transmitting the incident light having the fifth preset incident angle to the sixth preset position, so as to appear a sixth preset graphic and text information at the sixth preset position;

the color modulation structure is a fifth color modulation structure having a fifth modulation depth, and is used for appearing the fifth preset graphic and text information and the sixth preset graphic and text information in a fifth preset color; and

a real image of the fifth preset graphic and text information having the fifth preset color is appeared at the fifth preset position, and a real image of the sixth preset graphic and text information having the fifth preset color is appeared at the sixth preset position under the condition that the incident light having the fifth preset incident angle irradiates the optical anti-counterfeiting element.

7. The optical anti-counterfeiting element as claimed in claim 1, wherein the color modulation structure comprises

a metal film having a preset thickness; and a microstructure having steep sidewalls, or a sub-wavelength microstructure.

8. The optical anti-counterfeiting element as claimed in claim 7, wherein a depth of the microstructure having steep sidewalls ranges from 0.05μm to 10μm under the condition that the color modulation structure is the microstructure having steep sidewalls.

9. The optical anti-counterfeiting element as claimed in claim 7, wherein a period of the microstructure having steep sidewalls along at least one direction of two directions in a two-dimensional surface in which it is located ranges from 0.5μm to 100μm under the condition that the color modulation structure is the microstructure having steep sidewalls.

10. The optical anti-counterfeiting element as claimed in claim 7, wherein a depth of a groove of the sub-wavelength microstructure ranges from 50nm to 100nm under the condition that the color modulation structure is the sub-wavelength microstructure.

11. The optical anti-counterfeiting element as claimed in claim 7, wherein a shape of a groove of the sub-wavelength microstructure is sinusoidal, rectangular or zigzag under the condition that the color modulation structure is the sub-wavelength microstructure.

12. The optical anti-counterfeiting element as claimed in claim 7, wherein a period of the sub-wavelength microstructure in at least one direction of two directions extending along a two-dimensional surface in which it is located ranges from 50nm to 700nm under the condition that the color modulation structure is the sub-wavelength microstructure.

13. The optical anti-counterfeiting element as claimed in claim 1, wherein a period of the reflective facet along at least one direction of two directions in a two-dimensional plane in which it is located ranges from 0.5μm to 500μm.

14. An anti-counterfeiting product, comprising the optical anti-counterfeiting element as claimed in any one of claims 1 to 13.

15. The anti-counterfeiting product as claimed in claim 14, comprising a banknote, an identity card, a bank card or a draft.

Fig. 1

Fig. 2

Fig. 3

**Fig. 4(a)**

**Fig. 4(b)**

**Fig. 5**

**Fig. 6**

**Fig. 7**

**Fig. 8**

**Fig. 9(a)**

Fig. 9(b)

Fig. 9(c)

Fig. 10

**Fig. 11**

**Fig. 12**

**Fig. 13**

Fig. 14

**Fig. 15**

## INTERNATIONAL SEARCH REPORT

| International application No. |
| --- |
| **PCT/CN2020/110024** |

| A. | CLASSIFICATION OF SUBJECT MATTER |
| --- | --- |
| | B42D 25/309(2014.01)i |

According to International Patent Classification (IPC) or to both national classification and IPC

| B. | FIELDS SEARCHED |
| --- | --- |

Minimum documentation searched (classification system followed by classification symbols)

B42D 25/-; B42D 15/-

Documentation searched other than minimum documentation to the extent that such documents are included in the fields searched

Electronic data base consulted during the international search (name of data base and, where practicable, search terms used)

CNTXT; CNABS; VEN; CNKI: 防伪, 安全, 反射面, 反射小面, 颜色调制, 亚波长结构, 角度, fabricat+, forg+, counterfeit+, secur+, reflect+, facet, surface, face, sub w wavelength, structure, angle

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 108656782 A (ZHONGCHAO SPECIAL SECURITY TECHNOLOGY CO., LTD. et al.) 16 October 2018 (2018-10-16) description paragraphs 45-80, figures 1-7 | 1-6, 13-15 |
| Y | CN 108656782 A (ZHONGCHAO SPECIAL SECURITY TECHNOLOGY CO., LTD. et al.) 16 October 2018 (2018-10-16) description paragraphs 45-80, figures 1-7 | 7-12 |
| Y | CN 108422764 A (ZHONGCHAO SPECIAL SECURITY TECHNOLOGY CO., LTD. et al.) 21 August 2018 (2018-08-21) description paragraphs 18-37, figures 3, 4 | 7-12 |
| A | CN 103260894 A (GIESECKE & DEVRIENT GMBH) 21 August 2013 (2013-08-21) entire document | 1-15 |
| A | CN 104385800 A (ZHONGCHAO SPECIAL SECURITY TECHNOLOGY CO., LTD. et al.) 04 March 2015 (2015-03-04) entire document | 1-15 |
| A | CN 1538913 A (OVD KINEGRAM AG) 20 October 2004 (2004-10-20) entire document | 1-15 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 November 2020** | **25 November 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/110024** |

**C.      DOCUMENTS CONSIDERED TO BE RELEVANT**

| Category* | Citation of document, with indication, where appropriate, of the relevant passages | Relevant to claim No. |
|---|---|---|
| A | EP 3339048 A1 (GIESECKE DEVRIENT CURRENCY TECH GMBH) 27 June 2018 (2018-06-27)<br>        entire document | 1-15 |
| A | CN 107921810 A (GIESECKE & DEVRIENT CURRENCY TECHNOLOGY GMBH) 17 April 2018 (2018-04-17)<br>        entire document | 1-15 |

**INTERNATIONAL SEARCH REPORT**
Information on patent family members

International application No.

**PCT/CN2020/110024**

| Patent document cited in search report | | | Publication date (day/month/year) | Patent family member(s) | | | Publication date (day/month/year) |
|---|---|---|---|---|---|---|---|
| CN | 108656782 | A | 16 October 2018 | None | | | |
| CN | 108422764 | A | 21 August 2018 | None | | | |
| CN | 103260894 | A | 21 August 2013 | WO | 2012084182 | A2 | 28 June 2012 |
| | | | | DE | 102010055688 | A1 | 28 June 2012 |
| | | | | HK | 1184113 | A1 | 11 August 2017 |
| | | | | EP | 2655080 | A2 | 30 October 2013 |
| CN | 104385800 | A | 04 March 2015 | WO | 2016058465 | A1 | 21 April 2016 |
| | | | | US | 2017239972 | A1 | 24 August 2017 |
| | | | | EP | 3208099 | A1 | 23 August 2017 |
| | | | | RU | 2670078 | C1 | 17 October 2018 |
| CN | 1538913 | A | 20 October 2004 | CZ | 20040096 | A3 | 14 July 2004 |
| | | | | WO | 03000503 | A1 | 03 January 2003 |
| | | | | DE | 50201477 | D1 | 09 December 2004 |
| | | | | RU | 2004101286 | A | 10 February 2005 |
| | | | | AT | 281313 | T | 15 November 2004 |
| | | | | KR | 20040022431 | A | 12 March 2004 |
| | | | | JP | 2004530935 | A | 07 October 2004 |
| | | | | EP | 1397259 | A1 | 17 March 2004 |
| | | | | PL | 368914 | A1 | 04 April 2005 |
| | | | | DE | 10129939 | A1 | 16 January 2003 |
| | | | | US | 2005068624 | A1 | 31 March 2005 |
| | | | | TW | I230325 | B | 01 April 2005 |
| | | | | ES | 2229159 | T3 | 16 April 2005 |
| EP | 3339048 | A1 | 27 June 2018 | DE | 102016015393 | A1 | 28 June 2018 |
| CN | 107921810 | A | 17 April 2018 | WO | 2016188619 | A1 | 01 December 2016 |
| | | | | DE | 102015006793 | A1 | 01 December 2016 |
| | | | | EP | 3302995 | A1 | 11 April 2018 |

Form PCT/ISA/210 (patent family annex) (January 2015)

**EP 4 039 493 A1**

**REFERENCES CITED IN THE DESCRIPTION**

**Patent documents cited in the description**

- CN 201910943326